Europäisches Patentamt

European Patent Office

Office européen des brevets

(11) Veröffentlichungsnummer: **0 372 269**
**A1**

(12) **EUROPÄISCHE PATENTANMELDUNG**

(21) Anmeldenummer: **89121149.2**

(22) Anmeldetag: **15.11.89**

(51) Int. Cl.5: **C21C 5/52, F27B 3/18,**
**F27D 3/00**

(30) Priorität: **18.11.88 DE 3839096**

(43) Veröffentlichungstag der Anmeldung:
**13.06.90 Patentblatt 90/24**

(84) Benannte Vertragsstaaten:
**AT BE CH DE ES FR GB GR IT LI LU NL SE**

(71) Anmelder: **Fuchs Systemtechnik GmbH**
**Reithallenstrasse 1**
**D-7601 Willstätt-Legelshurst(DE)**

(72) Erfinder: **Ehie, Joachim**
**Spitzenbergstrasse 7b**
**D-7606 Lautenbach(DE)**
Erfinder: **Fuchs, Gerhard**
**Eschigweg 1**
**D-7640 Kehl-Bodersweier(DE)**

(74) Vertreter: **Blumbach Weser Bergen Kramer**
**Zwirner Hoffmann Patentanwälte**
**Radeckestrasse 43**
**D-8000 München 60(DE)**

(54) **Verfahren zum Betrieb eines Einschmelzaggregates und Einschmelzaggregat für dieses Verfahren.**

(57) Bei einem Einschmelzaggregat aus einem eine Hitzequelle und einen Ofenherd enthaltenden Ofengefäß (3) und wenigstens einem seitlich am Ofengefäß angeordneten schachtförmigen Chargiergutvorwärmer (2), dessen Boden (13) zum Ofenherd (11) hin abfallend ausgebildet ist und dessen Innenraum (8) in einem an seinen Boden angrenzenden Bereich durch eine Verbindungszone mit dem Innenraum (9) des Ofengefäßes verbunden ist, wird durch Steuerung der Energiezufuhr in den unteren Bereich der sich im Chargiergutvorwärmer (2) ausbildenden Chargiergutsäule (25) ein durch Zusammenschweißen von Chargiergutteilen gebildetes Traggerüst (Eisenbär) in seiner räumlichen Ausdehnung verändert um den Materialfluß in den Ofenherd (11) zu steuern.

Fig.1

## Verfahren zum Betrieb eines Einschmelzaggregates und Einschmelzaggregat für dieses Verfahren

Die Erfindung betrifft ein Verfahren und eine Vorrichtung gemäß dem Gattungsbegriff der Ansprüche 1 bzw. 12.

Durch das DE-Gbm 84 12 739 sind ein Verfahren und eine Vorrichtung dieser Art bekanntgeworden.

Bei dem bekannten Verfahren wird das Chargiergut, insbesondere Stahlschrott, durch den schachtförmigen Chargiergutvorwärmer in einen im Ofengefäß vorhandenen Metallsumpf chargiert. Insbesondere bei in der Größe sehr unterschiedlichem Chargiergut, wenn dieses beispielsweise aus Schwerschrott, Mittelschrott und Leichtschrott besteht, besteht das Problem, dieses kontrolliert dem Ofenhert zuzuführen. Einerseits muß beim Einschmelzprozess das Beschickungsgut trotz stark schwankender Größe und Sperrigkeit durch den Vorwärmer gut in das Schmelzbad abfließen können, andererseits soll nach Erreichen des gewünschten Abstichgewichtes im Bad das noch im Vorwärmer befindliche Chargiergut zurückgehalten werden können und dies auch bei einer für den Abstich erforderlichen Kippbewegung des Ofengefäßes und des mit diesem integrierten Vorwärmers. Mechanische Absperrdorne, die zu diesem Zweck in den Innenraum des Vorwärmers eingeschoben wurden, haben sich hierbei wegen der starken thermischen und mechanischen Beanspruchung nicht bewährt.

Das letztgenannte Problem wird zwar dann gegenstandslos, wenn in der Einschmelzphase das gesamte in den Vorwärmer eingebrachte Chargiergut eingeschmolzen wird. In diesem Fall kann jedoch nur über einen Teil des Einschmelzprozesses die fühlbare Wärme der Ofengase zum Vorwärmen des Chargierguts ausgenutzt werden und es muß bei dem auf einen Abstich folgenden weiteren Einschmelzprozess eine verhältnismäßig lange Wartezeit für das Füllen des Vorwärmers und das Aufschmelzen des nicht vorgewärmten Materials in Kauf genommen werden.

Aufgabe der Erfindung ist es, ein Verfahren verfügbar zu machen, mit dem der Materialfluß in den Ofenherd steuerbar ist und mit dem es ohne den Einbau mechanischer Sperrorgane wie Dorne oder Klappen, möglich ist, ein im Vorwärmer befindliches Chargiergut zurückzuhalten. Außerdem soll ein Einschmelzaggregat für dieses Verfahren bereitgestellt werden.

Das erfindungsgemäße Verfahren ist durch die Merkmale des Anspruchs 1 gekennzeichnet. Vorteilhafte Ausgestaltungen des Verfahrens sind den Ansprüchen 2 bis 11 zu entnehmen. Das erfindungsgemäße Einschmelzaggregat für dieses Verfahren ist durch die Merkmale des Anspruchs 12 gekennzeichnet. Vorteilhafte Ausgestaltungen des Einschmelzaggregates sind den restlichen Ansprüchen zu entnehmen.

Während bei dem bekannten Einschmelzaggregat der Boden des schachtförmigen Chargiergutvorwärmers unter einem verhältnismäßig kleinen Neigungswinkel zum Boden des Ofenherdes hin abfällt, so daß der Badspiegel über einen wesentlichen Teil des Einschmelzprozesses höher als der gesamte Boden des Chargiergutvorwärmers liegt und die Chargiergutsäule am unteren Ende über den gesamten Querschnitt im Sumpf steht und damit auch dem Aufschmelzprozess durch das überhitzte Bad ausgesetzt ist, wird bei dem erfindungsgemäßen Verfahren der Boden unter einem größeren Neigungswinkel zum Ofenherd hin abfallend ausgebildet - 45° haben sich als vorteilhaft erwiesen - so daß ein Teilbereich des Bodens höher als der maximale Badspiegel liegt. Damit wird ein dem unmittelbaren Einflußbereich einer überhitzten Schmelze entzogener Abstützbereich für ein durch Zusammenschweißen von Chargiergutteilen gebildetes Traggerüst (Eisenbär) geschaffen, das durch Steuern der über die Brenner zugeführten Schmelzenergie und gegebenenfalls durch kurzzeitige Kühlung in seiner räumlichen Ausdehnung verändert werden kann. Es wird somit aus dem Chargiergutmaterial selbst ein in der Größe veränderbares Sperrorgan geschaffen, durch das der Materialzufluß vor dem Abstichvorgang zur gewünschten Zeit zum Halten gebracht werden kann und dies auch bei einer geometrischen Ausbildung des Schachtes und einer Größe der Verbindungszone zwischen Schacht und Ofengefäß, die den Materialfluß begünstigen, so daß auch bei sperrigem Chargiergut Blockierungen nicht zu befürchten sind.

Eine vorübergehende Kühlung des unteren Bereiches der Chargiergutsäule kann beispielsweise durch Einleiten von Gasen über die Düsen erfolgen, die einer endothermen Zersetzungsreaktion unterliegen.

Zur Steuerung der dem unteren Bereich der Chargiergutsäule zugeführten Schmelzenergie kann neben den Brennern auch die Strahlungshitze der Lichtbögen sowie die Berührung mit der überhitzten Schmelze herangezogen werden, wobei durch Erzeugung einer Rührwirkung im Schmelzbad, insbesondere in der Nähe der Verbindungszone, der Aufschmelzvorgang in diesem Bereich intensiviert werden kann. Die Rührwirkung kann beispielsweise durch Einblasen von Sauerstoff in eine kohlenstoffhaltige Schmelze oder durch Einleiten von Spülgasen durch Bodenspülsteine bewirkt werden.

Der Kohlenstoffgehalt der Schmelze kann in bekannter Weise durch Zugabe von Kohle oder stückigem oder granulatförmigem Roheisen entweder über den schachtförmigen Chargiergutvorwärmer oder unmittelbar in das Ofengefäß erhöht werden. Als zusätzliche Energiequelle in diesem Bereich können auch andere fossile Brennstoffe oder organische Abfälle dienen, die benachbart zur Verbindungszone in das Ofengefäß chargiert und verbrannt werden. Als organische Abfälle eignen sich beispielsweise zerkleinerte Autoreifen, wobei in diesem Fall die im Vorwärmer stets vorhandene Chargiergutsäule als Filter für die staubbeladenen Abgase dient.

Vorzugsweise verbleibt nach dem Abstich eine Restschmelze im Ofenherd (Sumpffahrweise), die noch ein Volumen von etwa 50 bis 100 % des Abstichvolumens - jeweils auf das Gewicht bezogen - besitzt. Außerdem sollte das Verhältnis des Energieeinbringens durch die Hitzequelle des Ofengefäßes, d.h. bei einem Lichtbogenofen durch die Lichtbogenenergie zu dem Energieeinbringen durch die Brenner zwischen 1 : 1 und 5 : 1 liegen. Hierdurch wird nach dem Abstich das Aufschmelzen des vorher zwangsweise gebildeten Traggerüstes beschleunigt und damit beim folgenden Einschmelzprozess der Materialfluß in den Herdraum beschleunigt in Gang gesetzt.

Das Einschmelzaggregat für das erfindungsgemäße Verfahren weist einen Boden des Chargiergutvorwärmers auf, der unter einem verhältnismäßig großen Neigungswinkel zum Ofenherd hin abfallend ausgebildet ist - der Neigungswinkel sollte größer als 30° und kleiner als 60° sein - so daß ein Teilbereich des Bodens höher als der maximale Badspiegel liegt. Vorzugsweise ist das Einschmelzaggregat durch einen seitlich am Ofengefäß eines Lichtbogenofens angeordneten Chargiergutvorwärmer gebildet, wobei die Elektroden des Lichtbogenofens in bekannter Weise aus der Mitte des Ofengefäßes in Richtung des schachtförmigen Chargiergutvorwärmers versetzt sind. Zur Erzielung einer Rührwirkung, insbesondere in der Nähe der Verbindungszone, sind zweckmäßigerweise in dem an die Verbindungszone angrenzenden Bodenbereich des Ofengefäßes Bodendüsen bzw. Bodenspülsteine angeordnet, durch die Gase eingeblasen werden können. Im Hinblick auf eine Sumpffahrweise soll das auf das Gewicht der Schmelze bezogene Fassungsvermögen des Ofenherdes bei maximalem Badspiegel dem 1,5- bis 2-fachen des Abstichgewichtes einer Schmelze entsprechen.

Um auch bei sperrigem Chargiergut einen guten Materialfluß durch den Chargiergutvorwärmer und die Verbindungszone in den Ofenherd zu gewährleisten, soll nicht nur der Durchtrittsquerschnitt in der Verbindungszone möglichst groß ausgebildet sein und sich nahezu über die gesamte Höhe des Ofengefäßes erstrecken, sondern auch das Verhältnis von Höhe h zu Quadratwurzel des mittleren Querschnitts $\overline{q}$ des schachtförmigen Chargiergutvorwärmers im Bereich zwischen 1,2 und 3 liegen. In Verbindung mit dem verhältnismäßig großen Neigungswinkel des Bodens im Bereich des Chargiergutvorwärmers wird hierdurch auch bei sperrigem Chargiergut ein guter Materialfluß im Ofenherd gewährleistet, wenn die räumliche Ausdehnung des als Sperrorgan wirkenden Traggerüstes (Eisenbären) im unteren Bereich der Chargiergutsäule durch die in diesem Bereich zugeführte Schmelzenergie ausreichend verringert oder das Traggerüst vollkommen beseitigt worden ist. Vorzugsweise ist für den Abstich ein exzentrisch im Boden des Ofengefäßes angeordnetes Abstichloch vorgesehen und das Ofengefäß sowie der mit diesem integrierte schachtförmige Chargiergutvorwärmer um eine Achse kippbar, die die Mitte des Vorwärmers mit der Gefäßmitte verbindet.

Im Hinblick auf einen guten Materialfluß soll sich außerdem der Querschnitt des Innenraums des Chargiergutvorwärmers nach unten erweitern. Als besonders vorteilhaft hat sich ein Querschnitt erwiesen, der nahezu rechteckig ausgebildet ist. Durch ein auf der Seite des Chargiergutvorwärmers segmentartig abgeschnittenes rundes bzw. ovales Ofengefäß, an das sich der Innenraum des rechteckigen Chargiergutvorwärmers durch die Verbindungszone anschließt, wird eine verhältnismäßig große Durchtrittsöffnung im Bereich der Verbindungszone gewährleistet.

Die Erfindung wird durch ein Ausführungsbeispiel anhand von zwei Figuren näher erläutert. Es zeigen schematisch

Fig. 1 einen Längsschnitt eines Einschmelzaggregates zur Durchführung des erfindungsgemäßen Verfahrens, und

Fig. 2 eine Draufsicht dieses Aggregates.

Das in den Figuren dargestellte Einschmelzaggregat umfaßt einen Lichtbogenofen 1 und einen schachtförmigen Chargiergutvorwärmer 2. Der Lichtbogenofen enthält ein Ofengefäß 3 mit einem ausschwenkbaren Deckel 4, durch den drei von Tragarmen 5 getragene, mittels einer Hub- und Schwenkvorrichtung anhebbare und absenkbare sowie seitlich verschwenkbare Elektroden 6 in das Ofengefäß einfahrbar sind.

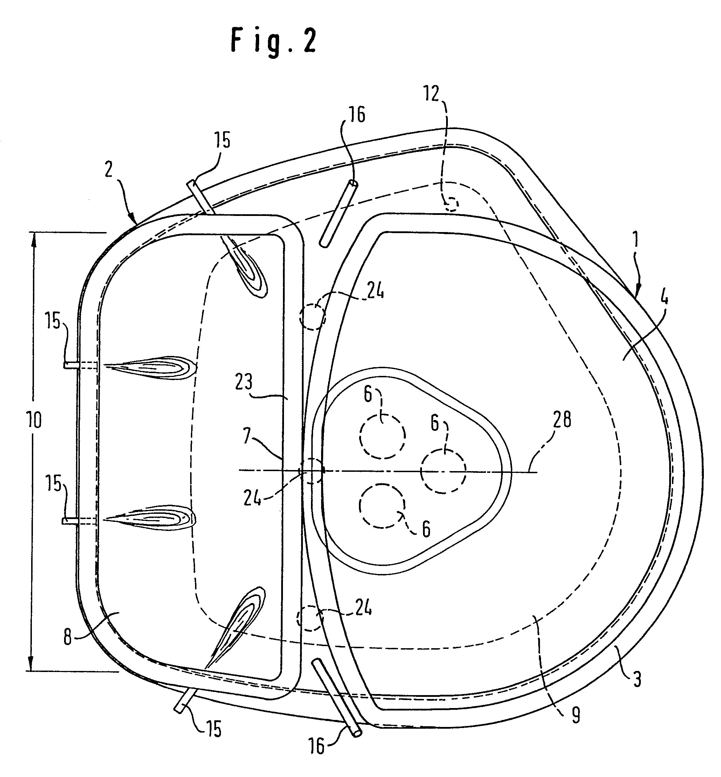

Der Chargiergutvorwärmer 2 ist seitlich am Ofengefäß 3 angeordnet und im Querschnitt nahezu rechteckig ausgebildet (siehe Fig. 2). Auf der Seite des Chargiergutvorwärmers ist das im wesentlichen runde Ofengefäß segmentartig abgeschnitten und hier ohne Seitenwand ausgebildet, so daß sich die Verbindungszone 7 zwischen dem Innenraum 8 des Chargiergutvorwärmers und dem Innenraum 9 des Ofengefäßes nahezu über die gesamte Höhe des Lichtbogenofens und etwa über die gesamte Länge 10 des Vorwärmers 2 erstreckt.

Der die Schmelze aufnehmende ausgemauerte Ofenherd ist mit 11 bezeichnet und weist ein exzentrisch angeordnetes Abstichloch 12 auf. Das Ofengefäß 1 und der mit diesem integrierte Vorwärmer 2 sind zum Abstechen um die Verbindungsachse 28 zwischen der Mitte des Vorwärmers und dem Elektrodenteilkreismittelpunkt, d.h. in Fig. 2 um eine waagerechte Achse in bekannter Weise kippbar. Der ausgemauerte Boden 13 des Vorwärmers 2 fällt unter einem Neigungswinkel 14 von etwa 45° zum Boden des Ofenherdes 11 ab. Außerdem erweitert sich der Querschnitt des Innenraums 8 des Vorwärmers 2 nach unten, so daß in Verbindung mit dem verhältnismäßig großen Durchtrittsquerschnitt der Verbindungszone 7 ein guter Materialfluß in den Herdraum gewährleistet ist. Im unteren Bereich des Chargiergutvorwärmers 2 münden oberhalb der Ausmauerung Brenner bzw. Düsen 15. Außerdem sind Brenner bzw. Düsen 16 vorgesehen, die zur Verbindungszone 7 hin ausgerichtet sind. Im oberen Bereich weist der Chargiergutvorwärmer 2 eine verschließbare Beschickungsöffnung 17 sowie einen Gasauslaß 18 auf. Der Gasauslaß 18 ist über ein Gasrohr 19 und eine Filterkammer mit einem Kamin verbunden. Wie aus Fig. 2 hervorgeht, sind die Elektroden 6 nicht in der Mitte des Ofengefäßes angeordnet, sondern in Richtung des schachtförmigen Chargiergutvorwärmers 2 versetzt. Hierdurch kann die durch die Lichtbögen erzeugte Strahlungshitze verstärkt auf das über den Chargiergutvorwärmer 2 zugeführte Chargiergut einwirken und gleichzeitig die Strahlungsbelastung der freien Wandbereiche des Lichtbogenofens verringert werden. Zur Verbesserung der Durchmischung der Schmelze sind in der Nähe der vertikalen Verlängerung der dem Ofengefäß benachbarten Schachtwand 23 Düsen oder Spülsteine 24 im Boden des Ofengefäßes angeordnet, durch die Gase einleitbar sind. Solche Spülsteine können auch an anderer Stelle im Boden des Ofengefäßes angeordnet sein. Vorzugsweise befinden sie sich jedoch im Bereich zwischen den Elektroden und der vertikalen Verlängerung der Schachtwand 23. Die gewünschte Bewegung der Schmelze ließe sich auch durch elektromagnetische Wirbelfelder oder eine Schaukelbeweung des Ofengefäßes erreichen.

Es wird nun das Verfahren zum Betrieb des beschriebenen Einschmelzaggregates erläutert.

Bei kaltem Anfahren des Einschmelzaggregates wird der schachtförmige Chargiergutvorwärmer 2 mit Schrott gefüllt und es werden zusätzlich etwa 20 bis 40 % der für eine Schmelze erforderlichen Schrottmenge unmittelbar in das Ofengefäß 3 des Lichtbogenofens 1 chargiert, so daß ein normales Zünden der Elektroden auf Schrott möglich ist. Nach Verschließen des Ofengefäßes und der Öffnung 17 des Vorwärmers und nach dem Einfahren der Elektroden wird durch Zünden der Elektroden und der Brenner ein kombinierter Schmelzprozess mit Lichtbogenenergie und Brennerenergie eingeleitet. Die dabei entstehenden heißen Abgase werden durch den Vorwärmer über dem Gasauslaß in das Gasrohr gezogen und geben ihre fühlbare Wärme an den Schrott ab.

Durch Einblasen von Gasen durch die Spülsteine 24 wird nach Bildung eines Schmelzbades eine gute Durchmischung zwischen der unter der Lichtbogeneinwirkung stärker erhitzten Schmelze im Ofenherd 1 und dem über den Boden 13 zu fließendem, durch die Brenner erschmolzenen, relativ kühlen flüssigen Stahles erreicht. Wenn mit dem in den Vorwärmer chargierten Schrott Kohle, Eisenschwamm, stückiges oder granulatförmiges Roheisen zugegeben worden ist, kann auch durch Einblasen von Sauerstoff über anstelle der Spülsteine vorgesehene Bodendüsen in diesen Bereich zusätzliche Schmelzenergie eingebracht werden.

Mit zunehmendem Flüssigbadvolumen wird durch Verringern der dem unteren Bereich der Schrottsäule 25 zugeführten Schmelzenergie ein Traggerüst in Form eines Schrott- bzw. Eisenbären gebildet, der den Materialfluß in den Ofenherd unterbricht bzw. das Herabstürzen von Schrott in den Herdraum verhindert. Dies geschieht durch Zurücknahme der Brennerenergie und durch Steuern der elektrischen Energie derart, daß die Lichtbogen in Schaumschlacke eingehüllt werden und somit die Strahlungseinwirkung der Lichtbögen auf den unteren Bereich der Schrottsäule herabgesetzt wird. Durch die Bodendüsen wird anstelle von Sauerstoff ein inertes Spülgas eingeleitet. Die Bildung des Traggerüstes läßt sich beschleunigen, wenn durch die Brenner bzw. Düsen 15 und 16 kühlende Gase eingeblasen werden, wofür sich beispielsweise Gase mit endothermer Zersetzungsreaktion, wie Propan oder Kohlendioxid, eignen.

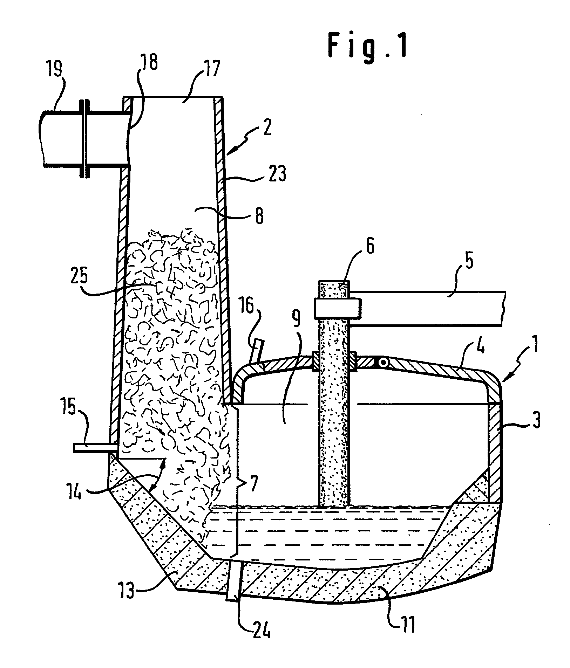

Rechtzeitig vor Erreichen des gewünschten Gesamtflüssigstahlgewichtes, das dem Abstichgewicht zuzüglich einer beim Abstich im Ofengefäß verbleibenden Restschmelze entspricht, werden die Brenner vollständig abgeschaltet und das Bad mittels der Lichtbogenenergie auf Abstichtemperatur gebracht, wobei hier durch eine entsprechende Schaumschlacke für eine vollkommene Abdekkung des Lichtbogens gesorgt wird. Durch die Rührwirkung der Spülgase ist eine gute Durchmischung auch in dieser Feinungsphase gewährleistet. Die hierdurch verursachte Unterspülung des Schrottbären -in Fig. 1 ist der Zustand vor dem Abstich dargestellt - ist nicht nachteilig, weil diesem wegen der starken Neigung des Bodens des Vorwärmers eine ausreichende Abstützfläche, die oberhalb des maximalen Badspiegels liegt, zur Verfügung steht. Die Unterspülung begünstigt sogar die Beseitigung des Eisenbären beim auf den Abstich folgenden nächsten Einschmelzprozess.

Während des Einschmelzprozesses ist durch Nachchargieren die Schrottsäule stets auf einer Mindesthöhe gehalten worden, so daß die fühlbare Wärme der Abgase während der gesamten Einschmelz- und Feinungsphase zur Schrottvorwärmung ausgenutzt werden kann. Darüber hinaus bietet diese Verfahrensweise die Möglichkeit, die Schrottsäule als Filter auszunutzen, so daß auch bis zu einer bestimmten Menge organische Abfälle, wie zerkleinerte Autoreifen, in das Ofengefäß als Energieträger chargiert werden können, die eine entsprechende Filterung der Abgase verlangen.

Der Abstich der Schmelze erfolgt durch Kippen des Lichtbogenofens 1 und des mit diesem integrierten Vorwärmers 2 nach dem Ausfahren der Elektroden. Hierbei wird im Ofengefäß eine Restschmelze belassen, die etwa 50 % des Abstichgewichtes ausmacht. Zur Einleitung des nächsten Schmelzprozesses werden nach Einfahren der Elektroden die Lichtbogen und Brenner erneut gezündet und durch die Bodendüsen bzw. Spülsteine Gase eingeblasen, um auch den Wärmeinhalt der überhitzten Schmelze des Ofenherdes für den Aufschmelzprozess im unteren Bereich der Chargiergutsäule auszunutzen. Auf diese Weise und wegen der bereits beim vorhergehenden Einschmelzprozess bewirkten Unterspülung des Traggerüstes läßt sich dieses sehr schnell in seiner räumlichen Ausdehnung verringern bzw. abschmelzen und damit der Materialfluß des vorerhitzten Schrottes in Gang setzen.

Der besondere Vorteil des beschriebenen Verfahrens liegt darin, daß durch die Steuerung der dem unteren Bereich der Chargiergutsäule zugeführten Schmelzenergie der Zeitpunkt des Abstiches bestimmt werden kann, unabhängig davon, ob wegen unterschiedlicher Zusammensetzung der Schrott im schachtförmigen Vorwärmer schneller oder langsamer eingeschmolzen wird. Ein hoher Sumpfanteil, d.h. Anteil der Restschmelze von mehr als 40 % des Abstichgewichtes, stellt eine Puffergröße dar, die ein zeitlich definiertes Abstechen des Lichtbogenofens erlaubt.

**Ansprüche**

1. Verfahren zum Betrieb eines Einschmelzaggregates aus einem eine Hitzequelle und einen Ofenherd enthaltenden Ofengefäß und wenigstens einem seitlich am Ofengefäß angeordneten schachtförmigen Chargiergutvorwärmer, dessen Boden zum Ofenherd hin abfallend ausgebildet ist und dessen Innenraum in einem an seinen Boden angrenzenden Bereich durch eine Verbindungszone mit dem Innenraum des Ofengefäßes verbunden ist, der außerdem in seinem oberen Bereich eine Beschickungsöffnung für Chargiergut sowie einen Gasauslaß und in seinem unteren Bereich Brenner bzw. Düsen aufweist, wobei das in den Chargiergutvorwärmer durch die Beschickungsöffnung chargierte metallische Chargiergut, insbesondere Stahlschrott, eine Chargiergutsäule bildet, die im Wärmetausch mit den heißen Gasen des Ofengefäßes und der Brenner aufgeheizt wird und die im unteren Bereich durch die Brenner und unter der Einwirkung der Hitzequelle des Ofengefäßes sowie im Kontakt mit dem flüssigen Sumpf des Ofenherdes aufgeschmolzen wird, und ferner die Schmelze im Ofenherd auf Abstichtemperatur gebracht und wenigstens teilweise abgestochen wird, dadurch **gekennzeichnet,** daß der Boden des schachtförmigen Chargiergutvorwärmers zum Ofenherd unter einem solchen Neigungswinkel abfallend ausgebildet ist, daß ein Teilbereich dieses Bodens höher als der maximale Badspiegel liegt, daß während des Einschmelzprozesses durch Nachchargieren die Chargiergutsäule auf einer Mindesthöhe gehalten wird und daß der Materialfluß in den Ofenherd dadurch gesteuert wird, daß durch Steuern der dem unteren Bereich der Chargiergutsäule zugeführten Schmelzenergie und gegebenenfalls durch kurzzeitige Kühlung dieses Bereiches ein hier durch Zusammenschweißen von Chargiergutteilen gebildetes Traggerüst (Eisenbär) in seiner räumlichen Ausdehnung verändert wird.

2. Verfahren nach Anspruch 1, dadurch **gekennzeichnet,** daß die Steuerung der dem unteren Bereich der Chargiergutsäule zugeführten Schmelzenergie bzw. die Kühlung über die Brenner bzw. Düsen erfolgt.

3. Verfahren nach Anspruch 2, dadurch **gekennzeichnet,** daß die Steuerung der dem unteren Bereich der Chargiergutsäule zugeführten Schmelzenergie über eine zwangsweise Bewegung der im Ofenherd vorhandenen Schmelze erfolgt.

4. Verfahren nach einem der Ansprüche 1 bis 3, dadurch **gekennzeichnet,** daß während der Einschmelzphase einer Schmelze das Traggerüst aufgeschmolzen und weitgehend entfernt und während der sich anschließenden Feinungsphase ein den Materialfluß sperrendes Traggerüst gebildet wird.

5. Verfahren nach einem der Ansprüche 1 bis 4, dadurch **gekennzeichnet,** daß die Hitzequelle des Ofengefäßes durch den bzw. die Lichtbogen eines oder mehrerer Lichtbogenelektrode(n) gebildet wird.

6. Verfahren nach einem der Ansprüche 1 bis 5, dadurch **gekennzeichnet,** daß die bzw. eine zusätzliche Hitzequelle des Ofengefäßes durch Verbrennung fossiler Brennstoffe im Ofengefäß gebildet wird.

7. Verfahren nach einem der Ansprüche 1 bis 6, dadurch **gekennzeichnet, daß** in das Ofengefäß benachbart zur Verbindungszone organische Abfälle chargiert werden.

8. Verfahren nach einem der Ansprüche 1 bis 7, dadurch **gekennzeichnet, daß** während des Einschmelzprozesses durch Unterbaddüsen bzw. gasdurchlässige Bodenspülsteine Gase zur zwangsweisen Bewegung und zur Verbesserung der Durchmischung der Schmelze eingeblasen werden.

9. Verfahren nach Anspruch 8, dadurch **gekennzeichnet, daß** die Gase in der Nähe der Verbindungszone eingeblasen werden.

10. Verfahren nach einem der Ansprüche 1 bis 9, dadurch **gekennzeichnet, daß** nach dem Abstich eine Restschmelze im Ofenherd verbleibt (Sumpffahrweise).

11. Verfahren nach einem der Ansprüche 1 bis 10, dadurch **gekennzeichnet, daß** das Verhältnis des Energieeinbringens durch die Hitzequelle des Ofengefäßes zu dem Energieeinbringen durch die Brenner zwischen 1 : 1 und 5 : 1 liegt.

12. Einschmelzaggregat für ein Verfahren nach einem der Ansprüche 1 bis 11 mit
einem eine Hitzequelle und einen Ofenherd (11) enthaltenden Ofengefäß (3), und
wenigstens einem seitlich am Ofengefäß (3) angeordneten schachtförmigen Chargiergutvorwärmer (2),
dessen Boden (13) zum Ofenherd (11) hin abfallend ausgebildet ist,
dessen Innenraum (8) in einem an seinen Boden (13) angrenzenden Bereich durch eine Verbindungszone (7) mit dem Innenraum (9) des Ofengefäßes (3) verbunden ist,
der außerdem in seinem oberen Bereich eine verschließbare Beschickungsöffnung (17) für Chargiergut sowie einen Gasauslaß (18) und in seinem unteren Bereich oberhalb seines Bodens Brenner bzw. Düsen (15, 16) aufweist,
dadurch **gekennzeichnet, daß** der Boden (13) des Chargiergutvorwärmers unter einem solchen Neigungswinkel (14) abfallend ausgebildet ist, daß ein Teilbereich dieses Bodens höher als der maximale Badspiegel liegt und dieser Teilbereich eine Abstützfläche für ein Traggerüst aus zusammengeschweißten Chargiergutteilen bildet, dessen räumliche Ausdehnung durch Steuerung der dem unteren Bereich des schachtförmigen Chargiergutvorwärmers zugeführten Schmelzenergie steuerbar ist.

13. Einschmelzaggregat nach Anspruch 12, dadurch **gekennzeichnet, daß** der Chargiergutvorwärmer (2) seitlich am Ofengefäß (3) eines Lichtbogenofens (1) angeordnet ist.

14. Einschmelzaggregat nach Anspruch 13, dadurch **gekennzeichnet, daß** die Elektrode(n) (6) des Lichtbogenofens (1) aus der Mitte des Ofengefäßes (3) in Richtung des schachtförmigen Chargiergutvorwärmers (2) versetzt ist (sind).

15. Einschmelzaggregat nach einem der Ansprüche 12 bis 14, dadurch **gekennzeichnet, daß** im Boden des Ofengefäßes (3) zwischen der Gefäßmitte und der vertikalen Verlängerung der benachbarten Schachtwand (23) wenigstens eine Düse bzw. ein gasdurchlässiger Bodenspülstein (24) angeordnet ist.

16. Einschmelzaggregat nach Anspruch 15, dadurch **gekennzeichnet, daß** die Düse bzw. der Spülstein (24) in der Nähe der vertikalen Verlängerung der dem Ofengefäß benachbarten Schachtwand (23) angeordnet ist.

17. Einschmelzaggregat nach einem der Ansprüche 13 bis 16, dadurch **gekennzeichnet, daß** sich die tiefste Stelle des Herdraums im Ofengefäß (3) im Bereich unter der (den) Elektrode(n) (6) befindet.

18. Einschmelzaggregat nach einem der Ansprüche 12 bis 17, dadurch **gekennzeichnet, daß** der Boden (13) des Chargiergutvorwärmers (2) unter einem Neigungswinkel (14) von größer 30° und kleiner 60° zum Ofenherd (11) hin abfallend ausgebildet ist.

19. Einschmelzaggregat nach einem der Ansprüche 12 bis 18, dadurch **gekennzeichnet, daß** das auf das Gewicht der Schmelze bezogene Fassungsvermögen des Ofenherdes (11) bei maximalem Badspiegel dem 1,5- bis 2-fachen des Abstichgewichts einer Schmelze entspricht.

20. Einschmelzaggregat nach einem der Ansprüche 12 bis 19, dadurch **gekennzeichnet, daß** das Verhältnis Höhe (h) zu Quadratwurzel des mittleren Querschnitts ($\overline{q}$) des schachtförmigen Chargiergutvorwärmers (2) im Bereich zwischen 1,2 und 3 liegt.

21. Einschmelzaggregat nach einem der Ansprüche 12 bis 20, dadurch **gekennzeichnet, daß** das Ofengefäß (3) und der mit diesem integrierte schachtförmige Chargiergutvorwärmer (2) um eine dessen Mitte mit der Gefäßmitte verbindende Achse kippbar ist.

22. Einschmelzaggregat nach einem der Ansprüche 12 bis 21, dadurch **gekennzeichnet, daß** sich der Querschnitt des Innenraums (8) des Chargiergutvorwärmers (2) nach unten erweitert.

# Fig.1

# Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-U-8 412 739 (FUCHS) | | C 21 C 5/52 |
| | --- | | F 27 B 3/18 |
| A | DE-A-3 322 485 (BRITISH STEEL) | | F 27 D 3/00 |
| | --- | | |
| A | GB-A-2 002 500 (NORDDEUTSCHE AFFINERIE) | | |
| | --- | | |
| A | GB-A- 895 534 (M.W. THRING) | | |
| | ----- | | |

**RECHERCHIERTE SACHGEBIETE (Int. Cl.5)**

C 21 C
H 05 B
F 27 D
F 27 B

Der vorliegende Recherchenbericht wurde für alle Patentansprüche erstellt

| Recherchenort | Abschlußdatum der Recherche | Prüfer |
|---|---|---|
| DEN HAAG | 02-03-1990 | OBERWALLENEY R.P.L.I. |